# EUROPEAN PATENT APPLICATION

(11) **EP 1 143 125 A1**
(43) Date of publication of application: **10.10.2001**
(21) Application number: 00966499.6
(22) Date of filing: 16.10.2000
(51) Int. Cl.: F01P 11/10, E02F 9/00

(54) **ENGINE COOLING DEVICE OF CONSTRUCTION MACHINERY**

(30) Priority: 26.10.1999 JP 30368299
(71) Applicant: HITACHI CONSTRUCTION MACHINERY CO., LTD., Bunkyo-ku, Tokyo 112-0004 (JP)
(72) Inventor: NAKAYAMA, Yoshimi, Yuuki-gun, Ibaraki 304-0821 (JP); SONODA, Jun, Kawasaki-shi, Kanagawa 214-0023 (JP); KAWASAKI, Kouji, Tsuchiura-shi, Ibaraki 300-0011 (JP)
(74) Representative: Beetz & Partner Patentanwälte
(86) International application number: JP0007151
(87) International publication number: WO0131178

(57) **Abstract**

In an engine cooling system for a construction machine comprising a shroud rear portion (10b) supported on the engine (8) side and surrounding a cooling fan (11), a shroud front portion (10a) supported on the heat exchanger (9) side for introducing cooling air (P) to the shroud rear portion (10b), and a sealing member (43) for sealing off a gap between the shroud rear portion (10b) and the shroud front portion (10a) while allowing a relative displacement between the shroud rear portion and the shroud front portion, an inner diameter (Da) of a downstream end (10a1) of the shroud front portion is larger than an outer diameter (Db) of an upstream end (10b1) of the shroud rear portion, and the downstream end (10a1) of the shroud front portion and the upstream end (10b1) of the shroud rear portion are located substantially at the same position in the horizontal direction. This arrangement reduces an installation space required within an engine room (4) and enables the engine cooling system to be applied to small-sized construction machines, while the fan efficiency can be improved.

## Description

### Technical Field

The present invention relates to an engine cooling system provided in an engine room of a construction machine, and more particularly to an engine cooling system for a construction machine provided with a shroud of a split structure, which comprises a first shroud supported on the engine side and a second shroud supported on the heat exchanger side.

### Background Art

In a construction machine such as a hydraulic excavator, a front device (work front) comprising, e.g., a boom, an arm and a bucket, and an upper swing structure are operated by hydraulic actuators such as a hydraulic cylinder and a hydraulic motor. These hydraulic actuators are operated by a hydraulic fluid delivered from a hydraulic pump that is driven by an engine. The upper swing structure is covered by a cover, and the engine and the hydraulic pump are disposed in an engine room formed within the cover.

Usually, in that type of construction machine, a cooling fan provided in the engine room is driven to introduce the open air through intake holes formed on one side of the cover and to induce cooling air for the purpose of cooling the engine. To this end, the so-called propeller fan, which is rotated by the driving force from an engine crankshaft, is employed as the cooling fan in many cases.

After being introduced to the interior of the engine room, the cooling air passes various heat exchangers, such as a radiator, for cooling them, and then enters the cooling fan after being restricted by a shroud that is provided downstream of the heat exchangers. The cooling air blown out of the cooling fan cools the engine, the hydraulic pump, etc. and is then discharged to the outside through discharge holes formed on the other side of the cover. Note that an engine room cooling structure substantially the same as that described above is applied to machines such as passenger cars and tracks.

The heat exchangers are fixed to a floor surface of the engine room independently of the engine, and belong to a vibration system separate from that of the engine. It has hitherto been general as disclosed in JP,A 7-77044, for example, that a shroud is fixedly supported on the heat exchanger side. Therefore, a comparatively large vertical relative displacement occurs between the shroud and the cooling fan belonging to the vibration system on the engine side, and a comparatively large gap (tip clearance) must be left between a downstream portion of the shroud, which surrounds the cooling fan, and the outer diameter of a impeller of the cooling fan. Such an arrangement has caused a backward flow, leakage or disturbance of the cooling air through the tip clearance, thus resulting in a reduction of an air flow rate and a lowering of fan efficiency.

To overcome the problems mentioned above, JP,A 9-112270, for example, discloses an engine cooling system for a construction machine provided with a shroud of a split structure, which comprises a first shroud (rotating shroud) fixed to a cooling fan supported on the engine side and a second shroud (also called a shroud cover) provided upstream of the first shroud and supported on the heat exchanger side for introducing cooling air to the first shroud, wherein a space between the first shroud and the second shroud is partitioned by a partition wall horizontally projecting from the second shroud toward the first shroud. With this arrangement, a backward flow or leakage of the cooling air possibly occurs only through a horizontal gap between the partition wall and the second shroud, and the vertical relative displacement mentioned above is not so problematic. Consequently, the fan efficiency can be improved by reducing a size of the horizontal gap.

### Disclosure of the Invention

However, the engine cooling system disclosed in JP,A 9-112270 has another problem as follows.

In the engine room, as described above, plural pieces of equipment including the heat exchangers, the shroud, the cooling fan and the engine are arranged in this order substantially along the flow direction of the cooling air (i.e., the axial direction of a rotary shaft of the cooling fan). Recently, many small-sized construction machines have been proposed for application to excavation sites of relatively small scale. In such a small-sized construction machine, since a space within a cover covering an upper swing structure is extremely restricted, there is a need for reducing an space required for installing the plural pieces of equipment from the viewpoint of layout in the engine room, particularly a need for reducing a dimension required for equipment installation in the axial direction of the cooling fan.

Trying to satisfy the above-mentioned need in the engine cooling system of the foregoing known art, the fixing structure between the first shroud or the cooling fan and the engine and the fixing structure between the heat exchangers and the second shroud are substantially uniquely determined from the viewpoints of mechanical structure and performances of the plural pieces of equipment. It is therefore thought to be effective to reduce the distance between the first shroud and the second shroud in the axial direction of the rotary shaft of the cooling fan (i.e., in the horizontal direction) so that the cooling fan and the heat exchangers are positioned closer to each other.

In the foregoing known art, however, a maximum outer diameter of the first shroud is set to be larger than an inner diameter of the second shroud at the downstream end thereof in the flow direction of the cooling air without paying a specific consideration to the above-described point. Therefore, the upstream end of the first shroud in the flow direction of the cooling air can be located substantially the same position as the downstream end of the second shroud in the flow direction of the cooling air, but a most part of the first shroud, which is rotated together with the fan and has a relatively large axial length from the structural point of view, is necessarily located on the side away from the heat exchangers (closer to the engine) with respect to the downstream end of the second shroud in the flow direction of the cooling air. It is hence difficult to reduce the distance between the first shroud and the second shroud in the axial direction of the rotary shaft of the cooling fan (i.e., the horizontal direction). In other words, a difficulty occurs in applying the known-art shroud of the split structure to an engine room of a small-sized construction machine, and in improving the fan efficiency.

Also, when trying to forcibly reduce the distance between the first shroud and the second shroud, the size of the second shroud, fixed to the heat exchanger side, in the axial direction of the rotary shaft of the cooling fan must be reduced. In this case, however, the specific function of the second shroud to smoothly introduce the cooling air having passed the heat exchangers while restricting a flow of the cooling air is impaired and a cross-sectional area of the cooling air flowing through the heat exchangers is reduced (i.e., a "dead area" is generated in the heat exchangers). This leads to an unsatisfactory result that the function of the engine cooling system is deteriorated.

An object of the present invention is to provide an engine cooling system for a construction machine provided with a shroud of a split structure, which comprises a first shroud supported on the engine side and a second shroud supported on the heat exchanger side, wherein a cooling fan and heat exchangers are positioned closer to each other to reduce an installation space required within an engine room so that the engine cooling system can be applied to small-sized construction machines, while the fan efficiency can be improved.

To achieve the above object, the present invention provides an engine cooling system for a construction machine, the engine cooling system being provided in an engine room, in which an engine of the construction machine is installed, and comprising at least one heat exchanger including a radiator to cool cooling water for the engine, and a cooling fan for inducing cooling air to cool the heat exchanger, wherein the engine cooling system further comprises a first shroud supported on the engine side and surrounding the cooling fan; a second shroud provided upstream of the first shroud and supported on the heat exchanger side for introducing the cooling air to the first shroud; and an elastic sealing member for sealing off a gap between the first shroud and the second shroud while allowing a relative displacement between the first shroud and the second shroud, wherein an inner diameter of a downstream end of the second shroud in the flow direction of the cooling air is larger than an outer diameter of an upstream end of the first shroud in the flow direction of the cooling air, and wherein the downstream end of the second shroud in the flow direction of the cooling air and the upstream end of the first shroud in the flow direction of the cooling air are located substantially at the same position in the axial direction of a rotary shaft of the cooling fan.

In the present invention, the cooling fan is surrounded by the first shroud supported on the engine side, and the elastic sealing member seals off the gap between the first shroud and the second shroud supported on the heat exchanger side. With this structure, since the first shroud surrounding the cooling fan belongs to the same vibration system on the engine side as the cooling fan, a relative displacement between the first shroud and the cooling fan is reduced and a tip clearance therebetween can be set to a smaller value. Therefore, the fan efficiency can be improved with no need of constituting the first shroud as a rotating shroud or providing an additional partition wall as having been practiced in conventional structures. Also, according to the present invention, by setting the inner diameter of the downstream end of the second shroud in the flow direction of the cooling air to be larger than the outer diameter of the upstream end of the first shroud in the flow direction of the cooling air, no interference occurs even when the upstream end of the first shroud is positioned fairly close to the downstream end of the second shroud. By utilizing such a feature, the downstream end of the second shroud and the upstream end of the first shroud are located substantially at the same position in the axial direction of the rotary shaft of the cooling fan. As a result, in comparison with the conventional structure wherein a most part of the rotating shroud, which has a relatively large axial length, is located on the side away from the heat exchanger (closer to the engine) with respect to the downstream end of the second shroud, the distance between the first shroud and the second shroud in the axial direction of the rotary shaft of the cooling fan (horizontal direction) can be reduced, and the cooling fan and the heat exchanger can be positioned closer to each other.

Accordingly, it is possible to reduce a space required for installing plural pieces of equipment to be arranged within the engine room, such as the heat exchanger, the shrouds, the cooling fan and the engine, and to apply the engine cooling system of the present invention to small-sized construction machines in which a space within a cover is restricted. Stated otherwise, even in small-sized construction machines, by arranging the first shroud surrounding the cooling fan so as to belong to the same vibration system on the engine side as the cooling fan, the tip clearance between the first shroud and the cooling fan can be reduced and the fan efficiency can be improved.

Preferably, the elastic sealing member includes vertical vibration absorbing means for absorbing vertical relative vibrations of the first shroud and the second shroud.

With the construction set forth above, the first shroud and the second shroud are arranged comparatively close to each other in the axial direction of the fan rotary shaft. To prevent interference between the first shroud and the second shroud which belong to different vibration systems, however, it is more preferable to effectively absorb vertical relative vibrations of the first shroud and the second shroud. In the present invention, therefore, the vertical vibration absorbing means is provided in the elastic sealing member to effectively absorb those vertical relative vibrations and to surely prevent the interference.

Also, preferably, the upstream end of the first shroud in the flow direction of the cooling air is positioned closer to the heat exchanger side than at least the downstream end of the second shroud in the flow direction of the cooling air.

In other words, by arranging the upstream end of the first shroud so as to locate inward of the downstream end of the second shroud, the distance between the first shroud and the second shroud in the axial direction of the rotary shaft of the cooling fan can be further reduced, and hence the cooling fan and the heat exchangers can be positioned even closer to each other.

### Brief Description of the Drawings

Fig. 1 is a side sectional view showing a detailed structure of an engine room in which an engine cooling system according to one embodiment of the present invention is provided.
Fig. 2 is a perspective view showing an overall external appearance structure of a hydraulic excavator to which the engine cooling system according to one embodiment of the present invention is applied.
Fig. 3 is an enlarged perspective view showing an external appearance structure of an engine room to which the engine cooling system according to one embodiment of the present invention is applied.
Fig. 4 is an enlarged view of an area A in Fig. 1.
Fig. 5 is a view showing a modification in which an upstream end of a shroud rear portion is positioned closer to the heat exchanger side than at least a downstream end of a shroud front portion.

### Best Mode for Carrying Out the Invention

An embodiment of an engine cooling system for a construction machine according to the present invention will be described below with reference to the drawings.

### Embodiment

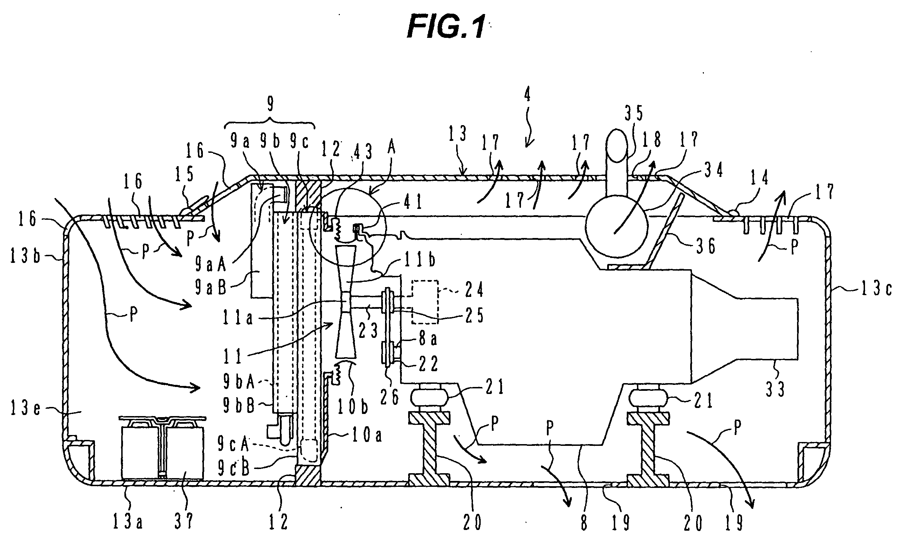

One embodiment of the present invention will be described with reference to Figs. 1 to 4. This embodiment represents the case where the present invention is applied to a hydraulic excavator as one example of construction machines.

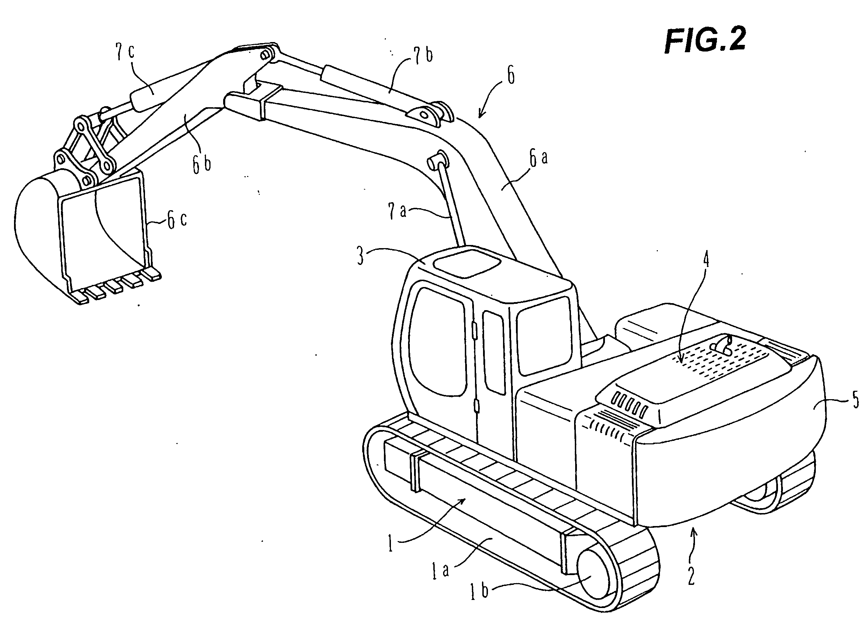

Fig. 2 is a perspective view showing an overall external appearance structure of a hydraulic excavator to which the engine cooling system according to one embodiment of the present invention is applied. Roughly speaking, the illustrated hydraulic excavator comprises a lower travel structure 1, an upper swing structure 2 mounted on the lower travel structure 1 to be able to swing, a cab 3 provided in front of the upper swing structure 2 on the left side, an engine room 4 disposed on the upper swing structure 2 to position its long-hand direction to left to right, a counterweight 5 provided in the backward portion of the swing structure 2, and a multi-articulated front device 6 attached to a front portion of the upper swing structure 2 and made up of a boom 6a, an arm 6b and a bucket 6c.

The lower travel structure 1 includes a pair of left and right crawler belts 1a. The crawler belts 1a are driven by the driving forces of respective travel hydraulic motors 1b.

The upper swing structure 2 including the cab 3, the engine room 4, the counterweight 5, the multi-articulated front device 6, etc. is turned relative to the lower travel structure 1 by a swing hydraulic motor (not shown) which is provided in a central portion of the upper swing structure 2.

The boom 6a, the arm 6b, and the bucket 6c constituting the multi-articulated front device 6 are operatively driven by a boom cylinder 7a, an arm cylinder 7b, and a bucket cylinder 7c respectively associated with them.

The above-mentioned driving equipment (hydraulic actuators), such as the hydraulic cylinders 7a, 7b, 7c, the swing hydraulic motor, and the travel hydraulic motors 1b, are driven by a hydraulic fluid that is supplied through a control valve device (not shown) for controlling a hydraulic fluid delivered from a hydraulic pump (not shown in Fig. 2, see Fig. 1 described below) driven by an engine 8 (not shown Fig. 2, see Fig. 1 described below) in the engine room 4 in response to an input from a control lever manipulated by an operator in the cab 3.

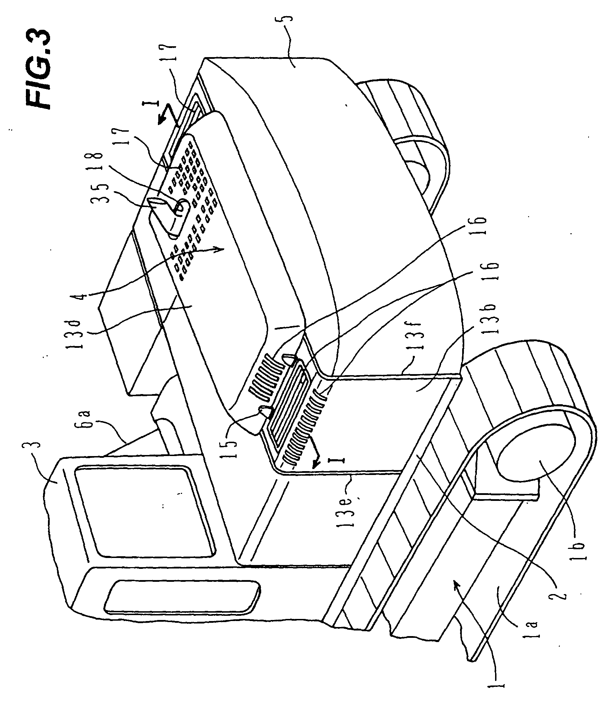

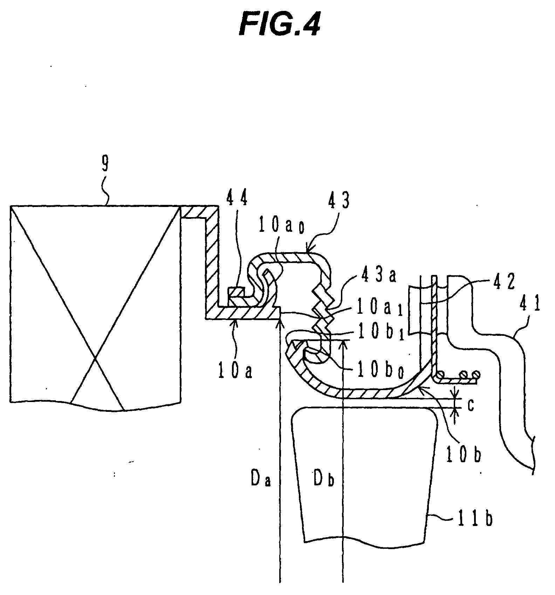

Fig. 3 is an enlarged perspective view showing an external appearance structure of the engine room 4 to which the cooling apparatus according to this embodiment is applied. Fig. 1 is a side sectional view, taken along line I-I in Fig. 3, showing a detailed structure of the engine room 4 in which the engine cooling system according to this embodiment is provided. Fig. 4 is an enlarged view of an area A in Fig. 1. Note that the same symbols in Figs. 1, 3 and 4 as those in Fig. 2 denote the same components.

Referring to Figs. 1, 3 and 4, within the engine room 4, there are provided heat exchangers 9, a shroud 10 fixed downstream of the heat exchangers 9, a cooling fan 11 for inducing cooling air (air flow) P to cool the heat exchangers 9, and a sealing partition member 12 provided along outer peripheral portions of the heat exchangers 9, including upper and lower portions thereof.

An outer shell of the engine room 4 is constituted by an engine cover 13 covering such equipment as the engine 8, the cooling fan 11, the heat exchangers 9, a hydraulic pump (described later), and a muffler (described later). The engine cover 13 is made up of a lower cover 13a, a suction-side (left-hand) lateral cover 13b, a delivery-side (right-hand) lateral cover 13c, an upper cover 13d, a front cover 13e, and a rear cover 13f.

One end of the upper cover 13d is attached to the delivery-side lateral cover 13c by a hinge 14 to be able to open and close, and latches 15 are provided at the other end of the upper cover 13d so that the opening/closing-side end of the upper cover 13d is latched to the suction-side lateral cover 13b. In an area of the upper cover 13d on the side adjacent to the heat exchangers 9 and in the suction-side lateral cover 13b, inlet ports 16 are formed for taking in the cooling air P from the exterior and introducing the taken-in air to the cooling fan 11. Also, in the remaining area of the upper cover 13d and the delivery-side lateral cover 13c, outlet ports 17, 18 are formed for discharging the cooling air P blown from the cooling fan 11 to the exterior. Further, outlet ports 19 are formed in the lower cover 13a on the side near the hydraulic pump (described later).

The engine 8 is installed through vibration dampers 21 on a frame 20 that is provided in a lower portion of the upper swing structure 2 and serves as a framework of the upper swing structure 2. Also, a pulley 22 is fixed to a crankshaft 8a of the engine 8. Further, an auxiliary rotary shaft 23 serving as a shaft of the cooling fan 11 in common is provided above the crankshaft 8a of the engine 8 so as to extend into the engine 8. A water pump 24 for circulating engine cooling water through a radiator (described later) as one of the heat exchangers 9 and not-shown tubing is coupled to the end of the auxiliary rotary shaft 23 extended into the engine 8.

The heat exchangers 9 are disposed in a front stage (upstream) of the cooling fan 11. More specifically, the heat exchangers 9 comprise, for example, an intercooler 9a positioned on the most upstream side in the flow direction of the cooling air P for preliminarily cooling intake air used for combustion in the engine 8, an oil cooler 9b adjacently positioned downstream of the inter cooler 9a for cooling the hydraulic fluid (working oil) used to drive the hydraulic actuators 7a - 7c, etc., and a radiator 9c positioned downstream of the oil cooler 9b, i.e., on the most downstream side in the flow direction of the cooling air P, to cool the cooling water for the engine 8. As with an ordinary engine cooling system for a construction machine of the above-mentioned type, depending on required cooling performance (heat exchange capacity), the intercooler 9a positioned on the most upstream side in the flow direction of the cooling air P has a smaller size than the oil cooler 9b and the radiator 9c as shown in Fig. 1. Particularly, the intercooler 9a has a much smaller size in vertical direction (up-and-down direction in Fig. 1).

Each of the intercooler 9a, the oil cooler 9b and the radiator 9c is constituted by holding piping, through which a liquid to be cooled flows, in a substantially frame-shaped member (which may be guides comprising two substantially flat plates vertically provided on both sides, this is similarly applied to the following description). More specifically, the intercooler 9a comprises piping 9aA, through which air used for combustion flows, and a frame member 9aB for holding the piping 9aA therein. The oil cooler 9b comprises piping 9bA, through which the working oil flows, and a frame member 9bB for holding the piping 9bA therein. The radiator 9c comprises piping 9cA, through which the engine cooling water flows, and a frame member 9cB for holding the piping 9cA therein. In such an arrangement, as shown in Fig. 1, the intercooler frame member 9aB, the oil cooler frame member 9bB and the radiator frame member 9cB are fixedly arranged such that these frame members are positioned close to each other side by side in the flow direction of the cooling air P without any noticeable gaps left therebetween. On the other hand, the intercooler piping 9aA, the oil cooler piping 9bA and the radiator frame member 9cA are arranged side by side in the flow direction of the cooling air P with a slight gap left therebetween.

The shroud 10 is positioned upstream of the cooling fan 11 and introduces the cooling air P induced by the cooling fan 11 to the suction side of the cooling fan 11. The shroud 10 is a split (so-called two-piece) one comprising a substantially box-shaped front portion (box shroud or shroud cover) 10a fixed to the downstream side of the heat exchangers 9, and a substantially bell mouth-shaped rear portion (fan ring) 10b positioned downstream of the front portion 10a and arranged radially outward of the cooling fan 11.

As detailed in Fig. 4, the front portion 10a is fixed to the downstream end (right-hand end in Fig. 4) of the heat exchangers 9 (specifically the radiator 9c) in the flow direction of the cooling air P, whereas the rear portion 10b is fixed through an attachment 42 to a bracket 41 provided on the engine 8. After stretching and placing a sealing member (rubber ring) 43, which is made of an elastic material such as rubber, on hook portions 10a₀, 10b₀ formed respectively near the downstream end of the front portion 10a and the upstream end of the rear portion 10b, a band 44 is fitted over a portion of the sealing member 43 near the upstream end thereof and clamps that portion to prevent the sealing member 43 from displacing or slipping off. With such a structure, a tip clearance *c* (see Fig. 4) between the shroud rear portion 10b and vanes 11b (described later) of the cooling fan 11 is minimized for an improvement of the fan performance, and a gap between the shroud front portion 10a and the shroud rear portion 10b is sealed off while allowing a relative displacement between the shroud front portion 10a belonging to a vibration system on the heat exchangers 9 side and the shroud rear portion 10b belonging to a vibration system on the engine 8 side. Stated otherwise, a negative pressure is generated between the cooling fan 11 and the heat exchangers 9, and serves as a source for producing the cooling air passing through the heat exchangers 9. If an open space is left between the shroud cooling fan 11 and the heat exchangers 9, the negative pressure would be lowered and the cooling effect would be reduced. The sealing member 43 is provided to prevent such a drawback.

In this connection, the most important feature of this embodiment is that an inner diameter Da (see Fig. 4) of a downstream end 10a1 of the shroud front portion 10a in the flow direction of the cooling air P is larger than an outer diameter Db (see Fig. 4) of an upstream end 10b1 of the shroud rear portion 10b in the flow direction of the cooling air P, and that the downstream end 10a1 of the shroud front portion 10a and the upstream end 10b1 of the shroud rear portion 10b are located substantially at the same position in the axial direction of the rotary shaft of the cooling fan 11 (= axial direction of the auxiliary rotary shaft 23, i.e., horizontal direction). Also, the sealing member 43 includes a bellows portion 43a that serves to effectively absorb vertical relative vibrations of the shroud front portion 10a and the shroud rear portion 10b.

The cooling fan 11 is the so-called propeller fan and is attached to the auxiliary rotary shaft 23. A pulley 25 is fixed to the auxiliary rotary shaft 23 at a position corresponding to the pulley 22. A belt 26 is looped between the pulley 22 and the pulley 25. Further, the cooling fan 11 comprises a boss 11a fixed to the auxiliary rotary shaft 23 to which the driving force from the engine crankshaft 8a is transmitted, and a plurality of vanes 11b fixed around the boss 11a. The cooling fan 11 is rotated with rotation of the auxiliary rotary shaft 23, thereby inducing the cooling air P (see arrows) flowing to the right in Fig. 1.

The partition member 12 seals off gaps between the heat exchangers 9 and the upper cover 13d, the lower cover 13a, the front cover 13e and the rear cover 13f.

The above-mentioned hydraulic pump 33 is disposed near the delivery-side lateral cover 13c of the engine 8, and is coupled to the engine 8 through a not-shown coupling mechanism (coupling) to be driven by the driving force of the engine 8. Also, exhaust gas from the engine 8 is discharged to the outside of the engine room 4 through an exhaust gas pipe (tail pipe) 35 after passing through a muffler 34 for arrest of sound. In this connection, a muffler cover 36 is fixedly provided above the engine 8 to prevent oil from scattering toward the engine 8 side from the hydraulic pump 33. Additionally, a battery 37 for supplying a startup current of the engine 8 is disposed in the engine room 4 upstream of the heat exchangers 9 (on the left-hand side in Fig. 1).

In the above-described structure, the shroud rear portion 10b constitutes a first shroud supported on the engine side and surrounding the cooling fan, and the shroud front portion 10a constitutes a second shroud provided upstream of the first shroud and supported on the heat exchangers side for introducing the cooling air to the first shroud. The sealing member 43 constitutes an elastic sealing member for sealing off a gap between the first shroud and the second shroud while allowing a relative displacement between the first shroud and the second shroud. Further, the bellows portion 43a of the sealing member 43 constitutes vertical vibration absorbing means for absorbing vertical relative vibrations of the first shroud and the second shroud.

The operation of the engine cooling system according to this embodiment will now be described.

When the engine 8 is driven for start-up, the rotation of the crankshaft 8a is transmitted to the auxiliary rotary shaft 23 through the pulley 22, the belt 26 and the pulley 25. Thereby, the water pump 24 is driven to circulate the cooling water for the radiator 9, and at the same time the cooling fan 11 is driven for rotation. With the rotation of the cooling fan 11, air outside the cover 13 is introduced as the cooling air P to the interior of the engine room 4 through the inlet ports 16. After cooling the heat exchangers 9 (the intercooler 9a, the oil cooler 9b and the radiator 9c) successively from the upstream side, the cooling air P is restricted while passing through the shroud 10 provided downstream of the heat exchangers 9, and is then introduced to the suction side (left-hand side in Fig. 1) of the cooling fan 11. Thereafter, the cooling air P blown off from the cooling fan 11 cools the engine 8, the hydraulic pump 33, etc., which are provided downstream of the cooling fan 11, and is then discharged to the outside of the engine room 4 through the outlet ports 17, 18, 19.

Advantages of this embodiment will be embodiment below.

In the engine cooling system of this embodiment which is constructed and operates as described above, the cooling fan 11 is surrounded by the shroud rear portion 10b supported on the engine 8 side, and the sealing member 43 seals off the gap between the shroud rear portion 10b and the shroud front portion 10a supported on the heat exchangers 9 side. With this structure, since the shroud rear portion 10b surrounding the cooling fan 11 belongs to the same vibration system on the engine 8 side as the cooling fan 11, a relative displacement between the shroud rear portion 10b and the cooling fan 11 is reduced and the tip clearance c can be set to a smaller value. Therefore, the fan efficiency can be improved with no need of constituting a shroud on the cooling fan side as a rotating shroud or providing an additional partition wall as having been practiced in conventional structures. Also, by setting the inner diameter Da of the downstream end 10a1 of the shroud front portion 10a in the flow direction of the cooling air P to be larger than the outer diameter Db of the upstream end 10b1 of the shroud rear portion 10b in the flow direction of the cooling air P, no interference occurs even when the upstream end 10b1 of the shroud rear portion 10b is positioned fairly close to the downstream end 10a1 of the shroud front portion 10a. By utilizing such a feature, the upstream end 10b1 of the shroud rear portion 10b and the downstream end 10a1 of the shroud front portion 10a are located substantially at the same position in the axial direction of the rotary shaft of the cooling fan 11 (axial direction of the auxiliary rotary shaft 23).

As a result, in comparison with the conventional structure wherein a most part of the rotating shroud, which has a relatively large axial length, is located on the side away from the heat exchangers (closer to the engine) with respect to the downstream end of the second shroud (corresponding to the shroud front portion 10a in the embodiment), the horizontal distance between the shroud front portion 10a and the shroud rear portion 10b can be reduced, and the cooling fan 11 and the heat exchangers 9 can be positioned closer to each other.

Accordingly, it is possible to reduce a space required for installing plural pieces of equipment to be arranged within the engine room 4, such as the heat exchangers 9, the shrouds 10a, 10b, the cooling fan 11 and the engine 8, and to apply the engine cooling system of the embodiment to small-sized construction machines in which a space within the cover 13 is restricted. Stated otherwise, even in small-sized construction machines, by arranging the shroud rear portion 10b surrounding the cooling fan 11 so as to belong to the same vibration system on the engine 8 side as the cooling fan 11, the tip clearance c between the shroud rear portion 10b and the cooling fan 11 can be reduced and the fan efficiency can be improved.

Also, with the above-described construction, the shroud front portion 10a and the shroud rear portion 10b are arranged comparatively close to each other in the axial direction of the fan rotary shaft (horizontal direction). To prevent interference between the shroud front portion 10a and the shroud rear portion 10b which belong to different vibration systems, however, it is more preferable to effectively absorb vertical relative vibrations of the shroud front portion 10a and the shroud rear portion 10b. In the embodiment, therefore, the bellows portion 43a is provided as vertical vibration absorbing means in the sealing member 43. The provision of the bellows portion 43a results in another advantage that those vertical relative vibrations can be effectively absorbed and the interference can be surely prevented.

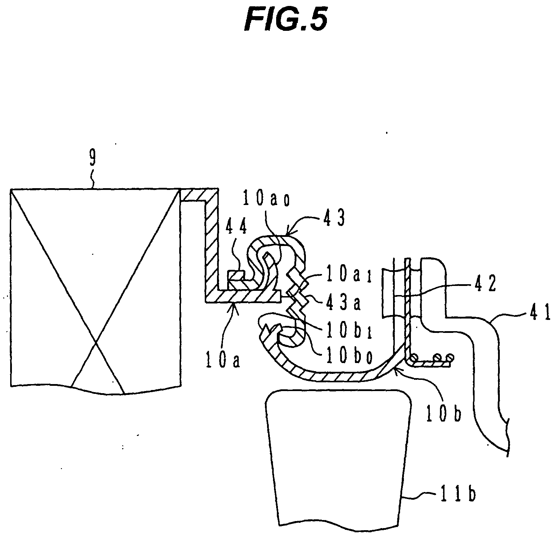

In the above-described embodiment, the upstream end 10b1 of the shroud rear portion 10b and the downstream end 10a1 of the shroud front portion 10a are located substantially at the same position in the axial direction of the auxiliary rotary shaft 23 of the cooling fan 11. The present invention is however not limited to such an arrangement. As shown in Fig. 5, the upstream end 10b1 of the shroud rear portion 10b may be positioned closer to the heat exchangers 9 side than at least the downstream end 10a1 of the shroud front portion 10a. By arranging the upstream end 10b1 of the shroud rear portion 10b so as to locate inward of the downstream end 10a1 of the shroud front portion 10a, the distance between the shroud front portion 10a and the shroud rear portion 10b in the axial direction of the rotary shaft of the cooling fan can be further reduced, and hence the cooling fan 11 and the heat exchangers 9 can be positioned even closer to each other.

While the above description has been made of, by way of example, the case of applying the present invention to the engine cooling system including the intercooler 9a, the oil cooler 9b and the radiator 9c as the heat exchangers 9, the present invention is not limited to such a case. As a matter of course, the present invention can also be applied to the case where only the intercooler and the radiator are arranged as the heat exchangers. Furthermore, the heat exchangers are not limited to those three types of units. For example, a condenser for an air conditioner in the cab 3 may be additionally arranged if necessary, and may be cooled with the cooling air P.

The present invention has been described above, by way of example, in connection with the application to an engine room of a hydraulic excavator. However, the present invention is not limited to such an application, but may also be applied to engine rooms of other construction machines such as a crane, a self-propelled crusher and a wheel loader. It is needless to say that similar advantages can be obtained in those cases as well.

### Industrial Applicability

According to the present invention, since the distance between the first shroud and the second shroud in the axial direction of the rotary shaft of the cooling fan (horizontal direction) can be reduced and the cooling fan and the heat exchangers can be positioned closer to each other, it is possible to reduce a space required for installing plural pieces of equipment to be arranged within the engine room. Even in small-sized construction machines in which a space within the cover is restricted, therefore, the first shroud surrounding the cooling fan can be arranged on the same vibration system on the engine side as the cooling fan so that the tip clearance between the cooling fan and the first shroud is reduced and the fan efficiency is improved.

## Claims

1. An engine cooling system for a construction machine, said engine cooling system being provided in an engine room (4), in which an engine (8) of the construction machine is installed, and comprising at least one heat exchanger (9) including a radiator (9c) to cool cooling water for said engine (8), and a cooling fan (11) for inducing cooling air (P) to cool said heat exchanger (9),
wherein said engine cooling system further comprises a first shroud (10b) supported on the engine (8) side and surrounding said cooling fan (11);
a second shroud (10a) provided upstream of said first shroud (10b) and supported on the heat exchanger (9) side for introducing said cooling air (P) to said first shroud (10b); and
an elastic sealing member (43) for sealing off a gap between said first shroud (10b) and said second shroud (10a) while allowing a relative displacement between said first shroud and said second shroud,
wherein an inner diameter (Da) of a downstream end (10a1) of said second shroud (10a) in the flow direction of said cooling air is larger than an outer diameter (Db) of an upstream end (10b1) of said first shroud (10b) in the flow direction of said cooling air, and
wherein the downstream end (10a1) of said second shroud (10a) in the flow direction of said cooling air and the upstream end (10b1) of said first shroud (10b) in the flow direction of said cooling air are located substantially at the same position in the axial direction of a rotary shaft of said cooling fan (11).
2. An engine cooling system for a construction machine according to Claim 1, wherein said elastic sealing member (43) includes vertical vibration absorbing means (43a) for absorbing vertical relative vibrations of said first shroud (10b) and said second shroud (10a).
3. An engine cooling system for a construction machine according to Claim 1 or 2, wherein the upstream end (10b1) of said first shroud (10b) in the flow direction of said cooling air is positioned closer to the heat exchanger (9) side than at least the downstream end (10a1) of said second shroud (10a) in the flow direction of said cooling air.
